# EUROPEAN PATENT SPECIFICATION

(11) **EP 3 076 565 B1**
(45) Date of publication and mention of the grant of the patent: **05.12.2018**
(21) Application number: 15305483.8
(22) Date of filing: 31.03.2015
(51) Int. Cl.: H04B 10/079, H04B 10/29, H04J 14/02

(54) **OPTICAL REPEATER FOR SUBMARINE NETWORK**
OPTISCHER VERSTÄRKER FÜR UNTERWASSERNETZWERK
RÉPÉTEUR OPTIQUE POUR RÉSEAUX SOUS-MARINS

(43) Date of publication of application: 05.10.2016
(73) Proprietor: Alcatel Lucent, 91620 Nozay (FR)
(72) Inventor: Le Roux, Patrice, 91620 NOZAY (FR)
(74) Representative: Nokia EPO representatives

(56) References cited:
- EP-A1- 1 959 587
- US-A- 5 440 418
- US-A1- 2006 198 016
- US-A1- 2009 324 233
- JENSEN R A: "Performance monitoring in undersea lightwave systems", OFC '99 IOOC OPTICAL FIBER COMMUNICATION CONFERENCE AND THE INTERNATIONAL CONFERENCE ON INTEGRATED OPTICS AND OPTICAL FIBER COMMUNICATION, IEEE, 21 February 1999 (1999-02-21), pages 38-40vol.1, XP032387751, DOI: 10.1109/OFC.1999.767786 ISBN: 978-1-55752-582-6

## Description

### Field of the invention

The invention relates to the technical field of undersea communications system, especially optical repeaters.

### Background

Advances in optical fibers over which optical data signals can be transmitted, as well as advances in wavelength division multiplexing (WDM) techniques, have resulted in optical technologies used for undersea communication. A conventional undersea communications system includes components such as repeaters to compensate for the attenuation of the optical signal, branching units to connect branch lines to a main trunk and hybrid optical and electrical cables which transmit both optical data signals and DC electrical power to supply power to the repeaters.

"Performance Monitoring In Undersea Lightwave Systems" by Richard A. Jensen (XP032387751) discloses an undersea monitoring system for determining the location and nature of the failure so an appropriate repair can be planned and executed quickly in the event of a failure, for example an external aggression from ship anchors. The monitoring system may use the command/response channel systems by way of instrumentation in each undersea amplifier pair to locally measure amplifier parameters. Typically, measurement commands are sent to the repeaters using low frequency tone bursts that are impressed as amplitude modulation on the high speed data traffic. Only one amplifier is queried at a time.

US-A-5440418 relates to an optical repeater that transmits management information. The management information includes an ID code for an optical repeater which has failed and the status of the failure.

EP-A-1959587 describes an optical amplifier in accordance with the preamble of claim 1, which is configured to transmit an indication signal carrying alarm suppression information.

### Summary

Aspects of the disclosure are based on the idea of enabling a fastest restoration of optical communications in a submarine optical network when a cable trunk section fault occurs.

In an embodiment, the invention provides an optical repeater as defined in claim 1.

Thanks to these features, the optical repeater automatically sends a signaling message to terminal units of the submarine optical network when a cable trunk section fault occurs near the optical repeater.

The optical repeater is implemented for bidirectional transmissions. The optical repeater further comprises:
a second upstream coupler having a coupler input, a first coupler output and a second coupler output, the coupler input of the second upstream coupler being intended to be connected to a third optical fiber line for receiving a second incoming optical signal from the second terminal unit,
a second repeater output being intended to be connected to a fourth optical fiber line for transmitting an second amplified optical signal to the first terminal unit,
a second optical amplifier arranged for transmitting and amplifying the second incoming optical signal from the first coupler output of the second upstream coupler to the second repeater output, the pumping module being further connected to the second optical amplifier for providing pumping power to the second optical amplifier,
a second upstream optical detector connected to the second coupler output of the second upstream coupler, the second upstream optical detector being configured to detect a second optical power of the second incoming optical signal,
wherein the monitoring unit is further connected to the second upstream optical detector and further configured to activate the modulation unit in response to detecting that the second optical power is below the predefined threshold,
wherein the modulation unit is adapted to modulate the pumping power of the pumping module to generate an amplitude-modulated signaling message carried by both the optical signal amplified by the first optical amplifier and the second optical signal amplified by the second optical amplifier, wherein the signaling message comprises the identifier of the optical repeater.

Thanks to these features, such an optical repeater is bidirectional.

According to embodiments, such an optical repeater can comprise one or more of the features below.

The pumping module may be made in various manners. In an embodiment, the pumping module is optical. The modulation unit may be made in various manners. In an embodiment, the modulation unit is configured to modulate a driving current of the pumping module. In an embodiment, the modulation unit is a variable power attenuator arranged for attenuating the pumping power of the pumping module. In an alternative embodiment, the modulation unit is a variable power attenuator arranged for attenuating the optical amplifier output power. In an embodiment, the pumping module comprises one or more pump laser sources.

The optical amplifier may be made in various manners. In an embodiment, the optical amplifier comprises a Doped Fiber Amplifier (DFA). In an embodiment, the optical amplifier comprises an Erbium Doped Fiber Amplifier (EDFA). In an embodiment, the optical amplifier comprises a Raman amplifier. In an embodiment, the optical amplifier comprises a hybrid Raman-EDFA amplifier mixing distributed Raman amplification and a EDFA amplifier.

Various frequencies may be suitable for operating the modulation unit. In an embodiment, the modulation unit operates at a modulation frequency comprised within the frequency range : 10kHz to 200kHz.

The modulation unit may operate with diverse modulation schemes. In an embodiment, the modulation unit applies an Amplitude Shift Keying (ASK) modulation. In an embodiment, the modulation unit applies a Binary Amplitude Shift Keying (BASK) modulation.

The optical detector may be implemented in diverse manners. In an embodiment, the upstream optical detector comprises a photodiode.

In an embodiment, the optical repeater further comprises:
- a downstream coupler having a coupler input, a first coupler output and a second coupler output, the coupler input of the downstream coupler being connected to the optical amplifier,
- a downstream optical detector, the downstream optical detector being connected to the second coupler output of the downstream coupler, the downstream optical detector being configured to detect an amplified optical power of the optical signal amplified by the optical amplifier,
wherein the first coupler output of the downstream coupler is connected to the repeater output,
wherein the downstream optical detector is further connected to the monitoring unit,
wherein the monitoring unit is further connected to the pumping module, the monitoring unit being further configured to drive the pumping module for adapting the pumping power as a function of the amplified optical power detected. Thanks to these features, a feedback loop may be employed for controlling the optical amplifier.

The optical repeater may be employed in various optical networks. For example, the optical repeater is employed in a terrestrial optical network or preferably a submarine optical network.

The invention also provides a submarine optical network comprising an optical repeater above described, the submarine optical network further comprising:
- a first optical fiber line connected to the coupler input of the upstream coupler of the optical repeater,
- a first terminal unit, the first terminal unit being connected to the first optical fiber line,
- a second optical fiber line connected to the repeater output, the second optical fiber line comprising an optical amplifier and an optical add and drop multiplexing branching unit,

- a second terminal unit, the second terminal unit being connected to the second optical fiber line,
- a intermediary terminal unit, the intermediary terminal unit being connected to the optical add and drop multiplexing branching unit for dropping optical signals from and adding optical signals to the second optical fiber line,
- a management system connected to the first terminal unit and/or second terminal unit and configured to:
   transmit a controlling message to the intermediary terminal unit in response to receiving the signaling message from the first or second terminal unit.

In embodiments, the management system is directly connected to the first terminal unit and/or second terminal unit by a backup terrestrial network, and indirectly connected to all the terminal units through the submarine optical network.According to embodiments, such a submarine optical network can comprise one or more of the features below.

The topology of the submarine optical network may be various. In an embodiment, the submarine optical network comprises two terrestrial terminal units connected through an optical communication line, and a branching unit on the communication line for enabling adding and dropping functions to an off-shore third terminal unit by connecting the third terminal unit. In an embodiment, the submarine optical network comprises a number of terminal units connected in series. In an embodiment, the submarine optical network is a broadcast network.

In an embodiment, the management system is configured to collect any signaling message incoming from any optical repeater of the submarine optical network in order to transmit controlling messages to terminal units and eventually other instruction messages, for example to optical repeaters. In an embodiment, the instruction messages are transmitted to an optical repeater through a terminal unit of the submarine optical network and are amplitude-modulated. In an embodiment, the modulation frequency of an instruction message is comprised within a frequency range: 10kHz to 200kHz. In an embodiment, the modulation is performed by a distributed Raman amplification in the terminal unit.

In an embodiment, the second optical fiber line comprises a plurality of optical add and drop multiplexing branching units, wherein the submarine optical network further comprises:
- a plurality of intermediary terminal units, each connected to the second optical fiber line via one of the optical add and drop multiplexing branching units,
wherein the management system comprises a database in which is stored a topological map of the submarine optical network, the topological map comprising identifiers and location information for the optical repeater and the intermediary terminal units of the submarine optical network, the management system being configured to:
in response to receiving the signaling message from the first or second terminal unit,
select one of the intermediary terminal units of the submarine optical network as a function of the identifier of the repeater and of the location of the intermediary terminal unit in the topological map, transmit the controlling message to the selected intermediary terminal unit.

In an embodiment, the selected intermediary terminal unit is configured to:
in response to receiving the controlling message, transmit to the optical amplifier of the second optical fiber line a loading signal carried on predefined loading channels of a wavelength division multiplexing (WDM) grid.

In an embodiment, the first terminal unit transmits the incoming optical signal on first wavelength channels of the WDM grid,
wherein the predefined loading channels are defined on a wavelength range that overlaps with the first wavelength channels.

The monitoring unit provided in the optical repeater can serve a number of purposes. Preferably, the monitoring unit is arranged to provide part or all of the control functions required by the different components of the optical repeater. In embodiments, the monitoring unit performs functions such as controlling the pumping module e.g. controlling a driving current of pump laser sources in the pumping module, controlling the signaling message encoder, controlling a controlling message and/ or instruction message decoder, etc. In an embodiment, the monitoring unit shall allow the detection of an instruction signal sent by terminal equipement at a modulation frequency comprised within a frequency range: 10kHz to 200kHz. A monitoring unit can be designed as a unitary component, e.g. a printed circuit board, or as distributed components.

In an embodiment, the first and third optical fiber lines are included in a first bidirectional optical communication line. The first optical fiber line is intended to transmit optical signals in the opposite direction to the third optical fiber line.

The second and fourth optical fiber lines are included in a second bidirectional optical communication line. The second optical fiber line is intended to transmit optical signals in the opposite direction to the fourth optical fiber line.

The phrases "optical fiber line" and "optical communication line" are used to designate a set of optical components constituting a single-direction or bidirectional optical path for optical signals. Such components may be selected in the list consisting of: cable trunk sections comprising optical fibers, chromatic dispersion compensators, amplifiers, branching units, optical isolators, optical filters, optical equalizers, and the like.

### Brief description of the drawings

These and other aspects of the invention will be apparent from and elucidated with reference to the embodiments described hereinafter, by way of example, with reference to the drawings.
Figure 1 is a schematic view of an submarine optical network comprising three Submarine Line Terminals Equipments A, B and **C,** wherein a fiber cut has occurred between the equipment A and the equipments B and C.
Figure 2 is the schematic view of the submarine optical network of Figure 1, wherein a repeater sends a signaling message to signal that a signal loss has occured.
Figure 3 is the schematic view of the submarine optical network of Figure 2, wherein a network management system sends a controlling message in an embodiment.
Figure 4 is the schematic view of the submarine optical network of Figure 3, wherein the communication between the equipment C and the equipment B is restored.
Figure 5 is a schematic and functional representation of an optical repeater which can be used in the optical network of Figure 2, in order to transmit a signaling message to the equipments A, B and C.
Figure 6 is a flow diagram of a method for transmitting a signaling message.

### Detailed description of the embodiments

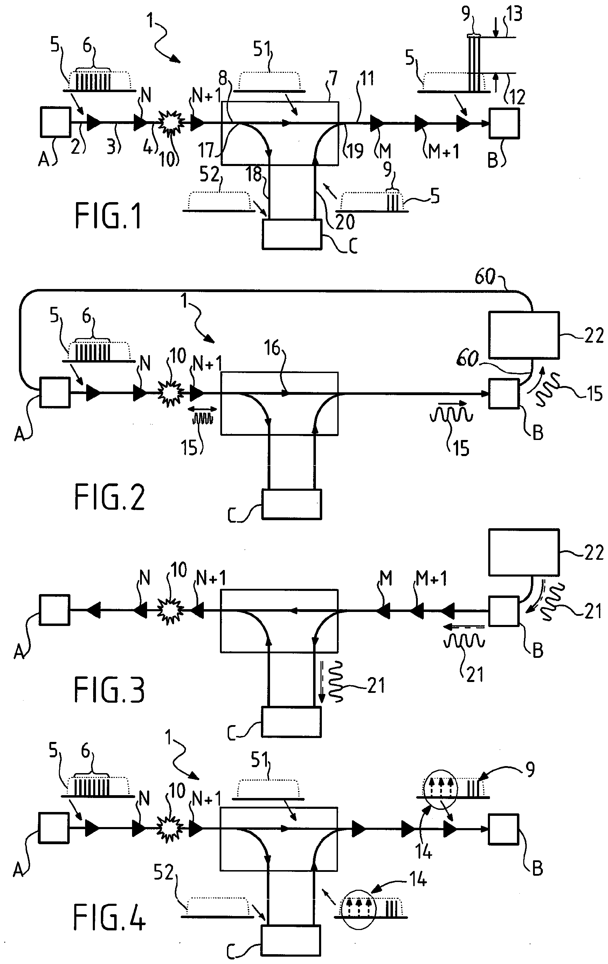

With reference to Figure 1, a submarine optical network 1 will be described. The network 1 comprises two Submarine Line Terminals Equipments (SLTEs) A, B connected by two optical communication lines 8 and 11 for transmitting optical WDM signals in a bidirectional manner. A Branching Unit (BU) 7 connects the optical communication line 8 to the optical communication line 11. The BU 7 allows dropping wavelength channels from the optical communication line 8 to an optical communication line 18 connecting a third SLTE C. The BU 7 also allows adding wavelength channels from an optical communication line 20 connecting the SLTE C to the communication line 11. The optical WDM signals transmitted by the SLTE A are multiplexed with the optical WDM signals transmitted by the SLTE C in the same optical communication line 11 in order to reach the SLTE B. The wavelength allocation may be configured in a fixed manner for each SLTE. For the sake of illustration, the SLTE C is a terminal equipment which is located on an offshore plateform whereas the SLTEs A and B are located on a terrestrial place.

The optical communication lines 8 and 11 are represented on Figure 1 for only one direction which will be referred to as the A-B direction in the following. The A-B direction is the direction of transmission of the optical WDM signals from the SLTE A to the SLTE B via the BU 7 within the optical communication lines 8 and 11. Similarly, the optical communication lines 18 and 20 connecting the SLTE C to the BU 7 are represented for the only A-B direction.

For the sake of clarity, the opposite direction of transmission of optical WDM signals, which will referred to as B-A direction in the following, is not represented on Figure 1 even though each optical communication line 8, 11, 18 and 20 of the network 1 is bidirectional.

The communication line 18 between the SLTE A and the SLTE C allows transmitting incoming WDM signals from the SLTE A to the SLTE C. The communication line 20 between the SLTE C and the SLTE B allows transmitting incoming optical WDM signals from the SLTE C to the SLTE B. For the sake of clarity, the optical WDM signals transmitted by the SLTE A will be further referred to as A-optical WDM signals, and the optical WDM signals transmitted by the SLTE C will be further referred to as C-optical WDM signals. The BU 7 comprises a splitter 17 in order to broadcast the A-optical WDM signal to the SLTEs B and C, and a coupler 19 in order to multiplex the A-optical WDM signals and the C-optical WDM signals in the optical communication line 11. The SLTE A is preconfigured for transmitting the A-optical WDM signals carried by wavelength channels 6 represented on the spectrum 5 on the A-B direction. The SLTE C is preconfigured for transmitting the C-optical WDM signals carried by wavelength channels 9 represented on the spectrum 5 on the A-B direction. The wavelength channels 6 and the wavelength channels 9 are disjoint.

The optical communication line 8 comprises sequential undersea cable trunk sections 2, 3 and 4. Each cable trunk section comprises an optical fiber in each direction in order to allow transmitting the optical WDM signals in both the A-B direction and the B-A direction. Due to scattering and absorption, the power of the optical WDM signals lowers as it travels along an optical fiber. In order to allow the A-optical WDM signals arriving to the SLTE C and B to be suitably detected and demodulated, the A-optical WDM signals should be periodically amplified along the optical communication line 8. Such an amplification is enabled by amplifiers arranged in optical repeaters. Two adjacent cable trunk sections, e.g. cable trunk sections 3 and 4, are plugged on both sides of a bidirectional repeater, e.g. repeater N+1, in order to amplify the optical WDM signals passing through. The cable trunk sections further comprise a conductive cable for supplying power to the repeaters, e.g. repeaters N and N+1.

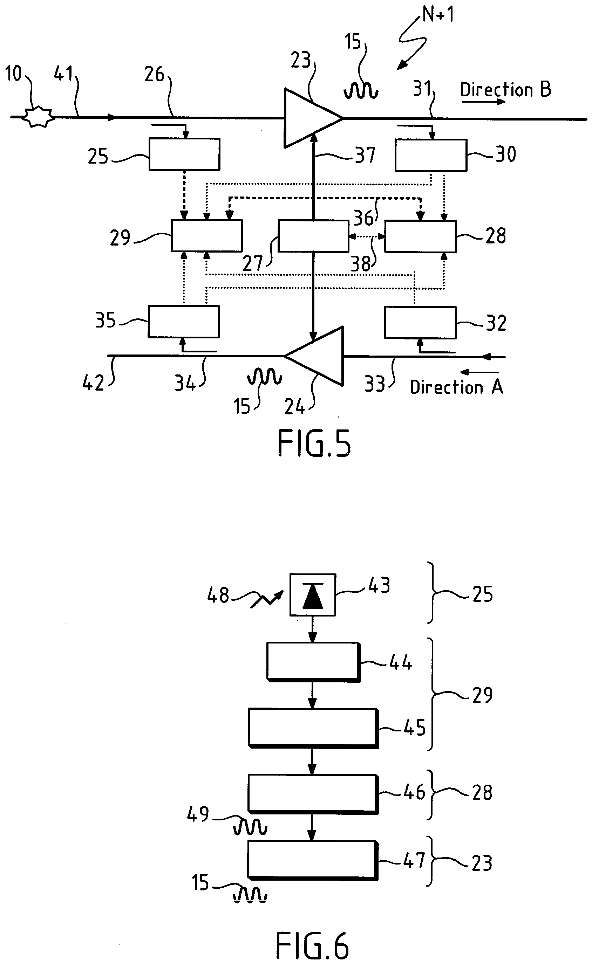

For the sake of clarity, the repeaters N, N+1 are represented on Figure 1 as unidirectional amplifiers in the A-B direction. However, the repeaters N, N+1 are bidirectional as it will later be described with reference to Figure 5.

With reference again to Figure 1, for the sake of illustration, the consequences of an accidental cut e.g. by a trawler boat, of a cable trunk section 4 of the line 8 on a point 10 will be described for the A-B direction. Because of the cut, the optical communication between the SLTE A and the SLTEs B and C is interrupted, as represented by the empty spectra 51 and 52. In other words, the A-optical WDM signal carried by the wavelength channels 6 are not transmitted any more from the cable trunk section 4 to the SLTEs B and C. Therefore, the optical communication line 8 should be repaired in order to restore the optical communication between the SLTE A and the SLTEs B and C.

Repairing the optical communication line 8 requires to identify which cable trunk section of the submarine optical network 1 is cut in order to fix it or to remove it and to replace it. Such an operation may be long.

The SLTE C sends the C-optical WDM signal on the A-B direction on wavelength channels 9 represented on the spectrum 5 whereas the optical communication line 8 is cut on the cable trunk section 4. Due to the periodical repeaters M, M+1 on the optical communication line 11, the power of the C-optical WDM signal carried on the wavelength channels 9 is excessively amplified.

As the submarine optical network 1 is preconfigured, the nominal amplification power of the repeaters M, M+1 is designed for being distributed on each wavelength channel of the spectrum 5 in order to amplify both the A-optical WDM signals and the C-optical WDM signals which are carried by the wavelength channels 6 and 9 of the spectrum 5.

However, the A-optical WDM signals carried by the wavelength channels 6 are not transmitted any more because of the cable trunk section cut. Therefore, the repeaters M, M+1 are not working as designed, i.e. all the amplification power is distributed on the only C-optical WDM signals carried by the wavelength channels 9. Therefore, the power 13 of the C-optical WDM signals carried by the wavelength channels 9 incoming to the SLTE B is extremely higher than the nominal power 12. For example, the variation between the power 13 and the nominal power 12 is equal to 10dB. Due to the high power 13 of the WDM signal carried by the wavelength channels 9, the C-optical WDM signals carried by the wavelength channels 9 are degraded, namely because of non linear interactions which increase with a power increasing. The Bit Error Rate (BER) of the C-optical WDM signals therefore increases, or the transmission is entirely disrupted. Finally, the optical communication should be restored between the SLTE C and the SLTE B in order to restore the BER of the C-optical WDM signals.

To sum up, the cut on the cable trunk section 4 has two different consequences on the optical traffic on the A-B direction:
- The A-optical WDM signals are not received by the SLTE B, and
- The C-optical WDM signals received by the SLTE B are too degraded to be read by the SLTE B.

With reference to Figure 2, the repeater N+1 automatically transmits a signaling message to the SLTE B in order to inform the SLTE B that the neighbor cable trunk section 4 is cut.

In the A-B direction, which is represented by an arrow 16, the repeater N+1 receives the A-optical WDM signals from the cable trunk section 4 which is cut. As the cable trunk section 4 is cut, the optical power of the A-optical WDM signals is very low or absent. The repeater N+1 automatically detects a power drop for the WDM signal received and therefore sends a signaling message 15 into the optical communication line 8. The signaling message comprises the address of the repeater N+1. The signaling message 15 is received by the SLTE B, and the SLTE B then transmits the signaling message 15 to a network management system (NMS) 22. which is connected to the SLTE B.

The NMS 22 is connected to both SLTEs A and B through a back-up terrestrial network 60 and configured to collect all signaling messages from the SLTEs A and B, in order to send controlling messages to the SLTEs for restoring communication, when possible and when required. The NMS 22 collects signaling messages from the SLTEs A and B thanks to the back-up terrestrial network 60. The NMS 22 comprises a database in which is stored a topological map of the submarine optical network. The topological map comprises adresses and location information for optical repeaters N, N+1, M and M+1 and of the SLTEs A, B and C.

The NMS 22 receives the signaling message 15 sent by the optical repeater N+1 via the SLTE B, and selects a SLTE of the submarine optical network as a function of the address of the optical repeater and of the location of the SLTE. As the optical repeater which has sent the signaling message is the optical repeater N+1, the NMS 22 determines that the A-optical WDM signals which are supposed to travel from the SLTE A to the SLTE B on the wavelength channels 6 are not transmitted anymore. Therefore, the NMS 22 selects the SLTE C which is located downstream of the SLTE A and sends a controlling message 21 to the SLTE C.

Then the controlling message 21 is sent to the SLTE C via the SLTE B. The controlling message comprises the address of the SLTE C as well as an instruction, for the SLTE C, to add a loading signal on preconfigured wavelength channels.

With reference to Figure 3, the transmission of the controlling message 21 from the NMS 22 to the SLTE C will be described in an embodiment. For the sake of clarity, the only direction which is represented on Figure 3 is yet the B-A direction. The NMS 22 sends the controlling message 21 to the submarine optical network 1 via the SLTE B. The controlling message 21 arrives to the SLTE C which recognizes the address and receives the instruction to add a loading signal on preconfigured wavelength channels in order to restore the optical communication between the SLTE C and the SLTE B. The preconfigured wavelength channels are the loading channels 14 represented on Figure 4. The SLTE C is preconfigured to add the loading signal on these loading channels 14 in the A-B direction. Adding the loading signal on loading channels 14 in place of the missing A-optical WDM signals carried by the wavelength channels 6 allows restoring the optical communication between the SLTE C and the SLTE B. Indeed, replacing the missing A-optical WDM signals by the loading signal allows distributing the amplification power of the repeaters M, M+1 to both the C-optical WDM signals and to the loading signal. Thanks to the addition of the loading signal, the C-optical WDM signal retrieves a nominal power 12.

Now, with reference to Figure 5 representing the repeater N+1, the generation of the signaling message 15 will now be described. The signaling message 15 is an amplitude-modulated optical message.

The repeater N+1 is connected to the cable trunk section 4. The cable trunk section 4 comprises an upstream optical fiber 41 and a downstream optical fiber 42. The upstream optical fiber 41 transmits incoming optical signals from the SLTE A to the repeater N+1 whereas the downstream optical fiber 42 transmits optical signals in the opposite direction. The cable trunk section 4 is impaired by a cut on a point 10.

The incoming optical signals are transmitted from an input of the repeater to an upstream coupler 26 in order to split the power of the incoming optical signals. The upstream coupler 26 is connected to an upstream photodiode 25 in order to monitor the upstream level of power of the incoming optical signals. The photodiode 25 is connected to a monitoring unit 29 whose purpose is to drive a pump control circuit 28 as represented by arrow 36. The upstream coupler is also connected to an Erbium Doped Fiber Amplifier (EDFA) 23 in order to amplify the incoming optical signals. The EDFA 23 is pumped by a laser pump 27, as represented by arrow 37. As represented by arrow 38, the laser pump 27 is powered by the pump control circuit 28. The incoming optical signals are amplified by the EDFA 23 and the downstream level of power is controlled thanks to a downstream coupler 31 which is connected to the output of the EDFA 23. The downstream coupler 31 splits the optical power of the amplified optical signals in order to transmit the amplified optical signals to the SLTE B and to monitor a downstream level of power of the amplified optical signals by way of a downstream photodiode 30. The downstream photodiode 30 is also connected to the pump control circuit 28 and to the monitoring unit 29.

As the upstream optical fiber 41 is cut in a point 10, the upstream photodiode 25 detects that the upstream level of power of the incoming optical signals is lower than a threshold of -10 dB. Therefore, the pump control circuit 28 modulates the laser pump 27 in order to generate an amplitude-modulated signaling message 15 in the direction of the SLTE B. The the pump control circuit 28 operates at a modulation frequency comprised within the frequency range: 10kHz to 200kHz. The signaling message is Binary Amplitude Shift Keying (BASK) modulated and encodes the address of the repeater N+1. The upstream level of power being very low, the modulation is performed on the EDFA optical noise.

The repeater also comprises an upstream coupler 33 connected to an upstream photodiode 32, a downstream coupler 34 connected to a downstream photodiode 35, the upstream and downstream photodiodes 32 and 35 being connected to the monitoring unit 29 in order to monitor the upstream and downstream level of power of optical signals propagating in the opposite direction, the optical signals being also amplified by an EDFA 24 which is also connected to and pumped by the laser pump 27. All these components operate in the same manner as described above, though for the reverse direction.

The EDFA 23 and the EDFA 24 are pumped by the same laser pump 27. Due to the detection of a power drop by the photodiode 25 in the upstream direction, the laser pump 27 will cause the EDFA 23 and the EDFA 24 to generate the same amplitude-modulated message 15 in the two directions. The amplitude-modulated message 15 which propagates on the optical fiber 42 in the direction of the SLTE A is an amplitude-modulation of a WDM comb of the optical signals incoming from the SLTE B, whereas the amplitude-modulated message 15 which propagates on the optical communication line 11 is an amplitude-modulation of the amplified spontaneous emission (ASE), i.e. optical noise, in the EDFA 23.

Similarly, a detection of a power drop by the photodiode 32 leads to the generation of the same amplitude-modulated message 15 in each direction.

The above description of the repeater N+1 may apply to all the repeaters N, M and M+1.

The cabletrunk section 4 default (i.e. optical power drop) is detected simultaneously by the two adjacent repeaters N and N+1. To avoid any risk of interferences between simulateous amplitude-modulated signaling messages sent by repeaters N and N+1 propagating through the same optical fibre lines, the modulation circuits may include a temporization mechanism. This temporization mechanism will impose a time delay between the activation of the amplitude-modulated signaling messages sent by adjacent repeaters, thus avoiding any risk of detection disturbance of the signaling messages by the terminal units. The modulation unit temporization mechanism may be a fix setting or advantageously a setting configurable via the NMS.

The SLTE C, which is an offshore plateform, need not be directly connected to the NMS 22. This is an advantageous aspect of the optical repeaters capable of sending automatic signaling messages on the submarine optical network. Indeed, in case of a fault affecting the optical communication line 8 or 11 between the SLTE A and the SLTE B, whether the fault occurs between the SLTE A and the BU 7 or between the SLTE B and the BU 7, a signaling message 15 incoming from at least one adjacent optical repeater N, N+1 or M, M+1 will always be received by one of SLTEs A and B and communicated to the NMS 22.

With reference to Figure 6, a method to automatically generate a signaling message to a terminal unit in case of a cut of one optical communication line of a network will now be described. The method is performed by the optical repeater near a cut cable trunk section.

In a first step 43, an optical power of an incoming optical signal is detected. The optical power is converted in a voltage value V_Input Level. The first step 43 is performed by the upstream photodiode 25.

In a second step 44, the voltage value V_Input Level is compared to a threshold Vref. The second step 44 is performed by the monitoring unit 29.

In a third step 45, an electrical signaling message is automatically processed when the voltage value V_Input Level is below the threshold Vref. The third step 45 is performed by the monitoring unit 29.

In a fourth step 46, the electrical signaling message electrically drives the laser pump 27 for converting the electrical signaling message into an optical amplitude-modulated pumping 49. The fourth step 46 is performed by the pump control circuit 28.

In a fifth step 47, the optical amplitude-modulated pumping optically pumps the EDFA 23, which results in the generation of the amplitude-modulated signaling message 15.

In another embodiment, the NMS 22 communicates with the SLTE C thanks to a redondant satellite-based network. When receiving the signaling message 15 as above described, the NMS 22 thus automatically determines that the consequence of the lack of the WDM signal supposed to be carried on the wavelength channels 6 on the optical communication line 11 is an impairment of the WDM signal carried by the wavelength channels 9 which are sent to the SLTE B by the SLTE C. Indeed, the SLTE C is located downstream of the repeater N+1 in the A-B direction. Therefore, the NMS 22 sends the controlling message 21 directly to the SLTE C thanks to a satellite-based communication.

In another embodiment, the submarine optical network 1 is reconfigurable instead of being fixed wavelength-allocated. The NMS 22 thus may comprise a datatable in which is stored a reconfigurable wavelength allocation map and the controlling message 21 thus comprises the instruction, for the SLTE C, of which wavelengths of a WDM comb are to be filled with a loading signal carried by loading channels.

Elements such as the control unit and electronic devices could be e.g. hardware means like e.g. an ASIC, or a combination of hardware and software means, e.g. an ASIC and an FPGA, or at least one microprocessor and at least one memory with software modules located therein. A NMS can be a hardware device, for example a personal computer, a workstation, an Internet appliance, or other general purpose or specific purpose communications device. A software program running on this system performs network management functions to control the network elements.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several «means».

In the claims, any reference signs placed between parentheses shall not be construed as limiting the scope of the claims.

## Claims

1. An optical repeater (N+1) for a submarine optical network, the optical
repeater comprising:
an upstream coupler (26) having a coupler input, a first coupler output and a second coupler output, the coupler input of the upstream coupler being intended to be connected to a first optical fiber line (41) for receiving an incoming optical signal from a first terminal unit (A),
an optical amplifier (23) arranged for transmitting and amplifying the incoming optical signal, wherein the optical amplifier (23) transmits and amplifies the incoming optical signal from the first coupler output of the upstream coupler to a repeater output, the repeater output being intended to be connected to a second optical fiber line for transmitting an amplified optical signal to a second terminal unit (B),
an upstream optical detector (25) configured to detect an optical power of the incoming optical signal, wherein the upstream optical detector (25) is connected to the second coupler output of the upstream coupler,
a pumping module (27) connected to the optical amplifier for providing pumping power to the optical amplifier,
a modulation unit (28) adapted to modulate the pumping power (49) provided by the pumping module in response to detecting that the optical power is below a predefined threshold (45) to thereby generate an amplitude-modulated signaling message (15) carried by the optical signal amplified by the optical amplifier,
a monitoring unit (29) connected to the upstream optical detector and configured to activate the modulation unit (28) in response to detecting that the optical power is below the predefined threshold (45),
**characterized in that** the optical repeater further comprises:
a second upstream coupler (33) having a coupler input, a first coupler output and a second coupler output, the coupler input of the second upstream coupler being intended to be connected to a third optical fiber line for receiving a second incoming optical signal from the second terminal unit (B),
a second repeater output being intended to be connected to a fourth optical fiber line for transmitting an second amplified optical signal to the first terminal unit (A),
a second optical amplifier (24) arranged for transmitting and amplifying the second incoming optical signal from the first coupler output of the second upstream coupler to the second repeater output, the optical pumping module (27) being further connected to the second optical amplifier for providing pumping power to the second optical amplifier (24),
a second upstream optical detector (32) connected to the second coupler output of the second upstream coupler, the second upstream optical detector being configured to detect a second optical power of the second incoming optical signal,
wherein the monitoring unit (29) is further connected to the second upstream optical detector and further configured to activate the modulation unit (28) in response to detecting that the second optical power is below the predefined threshold,
wherein the modulation unit (28) is adapted to modulate the pumping power of the pumping module (29) to generate an amplitude-modulated signaling message carried by both the optical signal amplified by the first optical amplifier and the second optical signal amplified by the second optical amplifier, wherein the signaling message comprises an identifier of the optical repeater.

2. An optical repeater according to claim 1, wherein the optical repeater further comprises:
- a downstream coupler (31) having a coupler input, a first coupler output and a second coupler output, the coupler input of the downstream coupler being connected to the optical amplifier (23),
- a downstream optical detector (30), the downstream optical detector being connected to the second coupler output of the downstream coupler, the downstream optical detector being configured to detect an amplified optical power of the optical signal amplified by the optical amplifier (23),
wherein the first coupler output of the downstream coupler is connected to the repeater output,
wherein the downstream optical detector (30) is further connected to the monitoring unit (29),
wherein the monitoring unit is further connected to the pumping module (28),
the monitoring unit being further configured to drive the pumping module (27) for adapting the pumping power as a function of the amplified optical power detected.

3. The optical repeater according to any one of claim 1 to 2, wherein the modulation unit is configured to modulate a driving current of the pumping module.

4. The optical repeater according to any one of claim 1 to 3, wherein the modulation unit is a variable power attenuator arranged for attenuating the pumping power of the pumping module.

5. The optical repeater according to any of claim 1 to claim 4, wherein the optical amplifier comprises an Erbium Doped Fiber Amplifier (EDFA).

6. The optical repeater according to any of claim 1 to claim 5, wherein the optical amplifier comprises a Raman amplifier.

7. The optical repeater according to any of claim 1 to claim 6, wherein the modulation unit applies an Amplitude Shift Keying (ASK) modulation.

8. The optical repeater according to any of claim 1 to claim 7, wherein the modulation unit applies a Binary Amplitude Shift Keying (BASK) modulation.

9. The optical repeater according to any of claim 1 to claim 8, wherein the upstream optical detector comprises a photodiode.

10. A submarine optical network (1) comprising an optical repeater (N+1) according to any one of claim 1 to claim 9, the submarine network further comprising:
- a first optical fiber line (4, 41 and 42) connected to the coupler input of the upstream coupler (26) of the optical repeater (N+1),
- a first terminal unit (A), the first terminal unit being connected to the first optical fiber line (4),
- a second optical fiber line connected to the repeater output, the second optical fiber line comprising an optical amplifier and an optical add and drop multiplexing branching unit (7),
- a second terminal unit (B), the second terminal unit being connected to the second optical fiber line (11),
- a intermediary terminal unit (C), the intermediary terminal unit being connected to the optical add and drop multiplexing branching unit (7) for dropping optical signals from and adding optical signals to the second optical fiber line,
- a management system (22) connected to the first terminal unit and/or second terminal unit and configured to:
- transmit a controlling message (21) to the intermediary terminal unit (C) in response to receiving the signaling message (15) from the first or second terminal unit (A or B).

11. The submarine optical network according to claim 10, wherein the second optical fiber line comprises a plurality of optical add and drop multiplexing branching units, the submarine network further comprising:
- a plurality of intermediary terminal units, each connected to the second optical fiber line via one of the optical add and drop multiplexing branching units, wherein the management system comprises a database in which is stored a topological map of the submarine network, the topological map comprising identifiers and location information for the optical repeater and the intermediary terminal units of the submarine network, the management system being configured to:
- in response to receiving the signaling message from the first or second terminal unit,
- select one of the intermediary terminal units (C) of the submarine network (1) as a function of the identifier of the repeater and of the location of the intermediary terminal unit (C) in the topological map, ,
- transmit the controlling message (21) to the selected intermediary terminal unit (C).

12. The submarine optical network (1) according to claim 10 or 11, wherein the intermediary terminal unit is configured to:
in response to receiving the controlling message, transmit to the optical amplifier of the second optical fiber line (11) a loading signal carried on predefined loading channels (14) of a wavelength division multiplexing (WDM) grid (5).

13. The submarine optical network according to claim 12, wherein:
the first terminal unit transmits the incoming optical signal on first wavelength channels (6) of the WDM grid,
wherein the predefined loading channels (14) are defined on a wavelength range that overlaps with the first wavelength channels (6).

## Patentansprüche

1. Optischer Repeater (N+1) für ein optisches Unterwassernetzwerk, wobei der optische Repeater umfasst:
- einen Upstream-Koppler (26) der einen Kopplereingang, einen ersten Kopplerausgang und einen zweiten Kopplerausgang aufweist, wobei der Kopplereingang des Upstream-Kopplers vorgesehen ist zum Verbinden mit einer ersten Glasfaserleitung (41) zum Empfangen eines eingehenden optischen Signals von einer ersten Endeinheit (A),
- einen optischen Verstärker (23), der angeordnet ist zum Übertragen und Verstärken des eingehenden optischen Signals, wobei der optische Verstärker (23) das eingehende optische Signal von dem ersten Kopplerausgang des Upstream-Kopplers auf einen Repeaterausgang überträgt und verstärkt, wobei der Repeaterausgang vorgesehen ist zum Verbinden mit einer zweiten Glasfaserleitung zum Übertragen eines verstärkten optischen Signals auf eine zweite Endeinheit (B),
- einen optischen Upstream-Detektor (25), der konfiguriert ist zum Erkennen einer optischen Leistung des eingehenden optischen Signals, wobei der optische Upstream-Detektor (25) verbunden ist mit dem zweiten Kopplerausgang des Upstream-Kopplers,
- ein Pumpmodul (27), das verbunden ist mit dem optischen Verstärker zum Bereitstellen von Pumpleistung für den optischen Verstärker,
- eine Modulationseinheit (28), die ausgelegt ist zum Modulieren der Pumpleistung (49), die bereitgestellt wird von dem Pumpmodul als Antwort auf das Erkennen, dass die optische Leistung unterhalb eines vordefinierten Schwellenwerts (45) liegt, um somit eine amplitudenmodulierte Signalisierungsnachricht (15) zu erzeugen, die transportiert wird von dem optischen Signal, das von dem optischen Verstärker verstärkt wird,
- eine Überwachungseinheit (29), die verbunden ist mit dem optischen Upstream-Detektor und konfiguriert ist zum Aktivieren der Modulationseinheit (28) als Antwort auf das Erkennen, dass die optische Leistung unterhalb des vordefinierten Schwellenwerts (45) liegt,
**dadurch gekennzeichnet, dass** der optische Repeater weiterhin umfasst:
- einen zweiten Upstream-Koppler (33), der einen Kopplereingang, einen ersten Kopplerausgang und einen zweiten Kopplerausgang umfasst, wobei der Kopplereingang des zweiten Upstream-Kopplers vorgesehen ist zum Verbinden mit einer dritten optischen Glasfaserleitung zum Empfangen eines zweiten optischen Eingangssignals von der zweiten Endeinheit (B),
- einen zweiten Repeaterausgang, der vorgesehen ist zum Verbinden mit einer vierten Glasfaserleitung zum Übertragen eines zweiten verstärkten optischen Signals auf die erste Endeinheit (A),
- einen zweiten optischen Verstärker (24), der angeordnet ist zum Übertragen und Verstärken des zweiten eingehenden optischen Signals von dem ersten Kopplerausgang des zweiten Upstream-Kopplers auf den zweiten Repeaterausgang, wobei das optische Pumpmodul (27) weiterhin verbunden ist mit dem zweiten optischen Verstärker zum Bereitstellen von Pumpleistung für den zweiten optischen Verstärker (24),
- einen zweiten optischen Upstream-Detektor (32), der verbunden ist mit dem zweiten Kopplerausgang des zweiten Upstream-Kopplers, wobei der zweite optische Upstream-Detektor konfiguriert ist zum Erkennen einer zweiten optischen Leistung des zweiten eingehenden optischen Signals,
wobei die Überwachungseinheit (29) weiterhin verbunden ist mit dem zweiten optischen Upstream-Detektor und weiterhin konfiguriert ist zum Aktivieren der Modulationseinheit (28) als Antwort auf das Erkennen, dass die zweite optische Leistung unterhalb des vordefinierten Schwellenwerts liegt,
wobei die Modulationseinheit (28) ausgelegt ist zum Modulieren der Pumpleistung des Pumpmoduls (29) zum Erzeugen einer amplitudenmodulierten Signalisierungsnachricht, die transportiert wird sowohl von dem optischen Signal, das verstärkt wurde durch den ersten optischen Verstärker, und von dem zweiten optischen Signal, das verstärkt wurde von dem zweiten optischen Verstärker, wobei die Signalisierungsnachricht eine Kennung des optischen Repeaters umfasst.

2. Optischer Repeater nach Anspruch 1, wobei der optische Repeater weiterhin umfasst:
- einen Downstream-Koppler (31), der einen Kopplereingang, einen ersten Kopplerausgang und einen zweiten Kopplerausgang aufweist, wobei der Kopplereingang des Downstream-Kopplers mit dem optischen Verstärker (23) verbunden ist,
- einen optischen Downstream-Detektor (30), wobei der optische Downstream-Detektor verbunden ist mit dem zweiten Kopplerausgang des Downstream-Kopplers, wobei der optische Downstream-Koppler konfiguriert ist zum Erkennen einer verstärkten optischen Leistung des optischen Signals, das von dem optischen Verstärker (23) verstärkt wurde,
- wobei der erste Kopplerausgang des Downstream-Kopplers verbunden ist mit dem Repeater-Ausgang,
- wobei der optische Downstream-Detektor (30) weiterhin verbunden ist mit der Überwachungseinheit (29),
- wobei die Überwachungseinheit weiterhin verbunden ist mit dem Pumpmodul (28),
- wobei die Überwachungseinheit weiterhin konfiguriert ist zum Antreiben des Pumpmoduls (27) zum Anpassen der Pumpleistung als Funktion der erkannten verstärkten optischen Leistung.

3. Optischer Repeater nach einem beliebigen der Ansprüche 1 bis 2, wobei die Modulationseinheit konfiguriert ist zum Modulieren eines Steuerstroms des Pumpmoduls.

4. Optischer Repeater nach einem beliebigen der Ansprüche 1 bis 3, wobei die Modulationseinheit ein variabler Leistungsdämpfer ist, der ausgelegt ist zum Dämpfen der Pumpleistung des Pumpmoduls.

5. Optischer Repeater nach einem beliebigen der Ansprüche 1 bis 4, wobei der optische Verstärker einen EDFA (Erbium Doped Fiber Amplifier) umfasst.

6. Optischer Repeater nach einem beliebigen der Ansprüche 1 bis 5, wobei der optische Verstärker einen Raman-Verstärker umfasst.

7. Optischer Repeater nach einem beliebigen der Ansprüche 1 bis 6, wobei die Modulationseinheit eine ASK-Modulation (Amplitude Shift Keying) umfasst.

8. Optischer Repeater nach einem beliebigen der Ansprüche 1 bis 7, wobei die Modulationseinheit eine BASK-Modulation (Binary Amplitude Shift Keying) umfasst.

9. Optischer Repeater nach einem beliebigen der Ansprüche 1 bis 8, wobei der optische Upstream-Detektor eine Fotodiode umfasst.

10. Optisches Unterwassernetzwerk (1), umfassend einen optischen Repeater (N+1) nach einem beliebigen der Ansprüche 1 bis 9, wobei das Unterwassernetzwerk weiterhin umfasst:
- eine erste Glasfaserleitung (4, 41 und 42), die verbunden ist mit dem Kopplereingang des Upstream-Kopplers (26) des optischen Repeaters (N+1),
- eine erste Endeinheit (A), wobei die erste Endeinheit verbunden ist mit der ersten Glasfaserleitung (4),
- eine zweite Glasfaserleitung, die verbunden ist mit dem Repeater-Ausgang, wobei die zweite Glasfaserleitung einen optischen Verstärker und eine optische Add-and-Drop-Multiplex-Abzweigeinheit (7) umfasst,
- eine zweite Endeinheit (B), wobei die zweite Endeinheit verbunden ist mit der zweiten Glasfaserleitung (11),
- eine Zwischenendeinheit (C), wobei die Zwischenendeinheit verbunden ist mit der optischen Add-and-Drop-Multiplex-Abzweigeinheit (7) zum Eliminieren von optischen Signalen von oder zum Hinzufügen optischer Signale zu der zweiten Glasfaserleitung,
- ein Verwaltungssystem (22), das verbunden ist mit der ersten Endeinheit und/oder der zweiten Endeinheit und konfiguriert ist zum:
- Übertragen einer Steuernachricht (21) auf die Zwischenendeinheit (C) als Antwort auf das Empfangen der Signalisierungsnachricht (15) von der ersten oder zweiten Endeinheit (A oder B).

11. Optisches Unterwassernetzwerk nach Anspruch 10, wobei die zweite Glasfaserleitung eine Vielzahl optischer Add-and-Drop-Multiplex-Abzweigeinheiten umfasst, wobei das optische Unterwassernetzwerk weiterhin umfasst:
- eine Vielzahl von Zwischenendeinheiten, jede verbunden mit der zweiten optischen Glasfaserleitung über eine der optischen Add-and-Drop-Multiplex-Abzweigeinheiten, wobei das Verwaltungssystem eine Datenbank umfasst, in der eine topologische Karte des Unterwassernetzwerks gespeichert ist, wobei die topologische Karte Kennungen und Standortinformation umfasst für den optischen Repeater und die Zwischenendeinheiten des Unterwassernetzwerks, wobei das Verwaltungssystem konfiguriert ist zum:
- als Antwort auf das Empfangen der Signalisierungsnachricht von der ersten oder zweiten Endeinheit,
- Auswählen einer der Zwischenendeinheiten (C) des Unterwassernetzwerks (1) als Funktion der Kennung des Repeaters und des Standorts der Zwischenendeinheit (C) in der topologischen Karte,
- Übertragen der Steuernachricht (21) auf die ausgewählte Zwischenendeinheit (C).

12. Optisches Unterwassernetzwerk (1) nach Anspruch 10 oder 11, wobei die Zwischenendeinheit konfiguriert ist zum:
Übertragen, als Antwort auf das Empfangen der Steuernachricht, auf den optischen Verstärker der zweiten Glasfaserleitung (11) eines Ladesignals, das transportiert wird auf vordefinierten Ladekanälen (14) eines WDM-Gitters (Wavelength Division Multiplexing) (5).

13. Optisches Unterwassernetzwerk nach Anspruch 12, wobei:
die erste Endeinheit das eingehende optische Signal auf erste Wellenlängenkanälen (6) des WDM-Gitters überträgt, wobei die vordefinierten Ladekanäle (14) definiert sind auf einem Wellenlängenbereich, der mit den ersten Wellenlängenkanälen (6) überlappt.

## Revendications

1. Répéteur optique (N+1) destiné à un réseau optique sous-marin, le répéteur optique comprenant :
- un coupleur amont (26) disposant d'une entrée de coupleur, d'une première sortie de coupleur et d'une deuxième sortie de coupleur, l'entrée de coupleur du coupleur amont étant destinée à être connectée à une première ligne de fibre optique (41) pour recevoir un signal optique d'entrée provenant d'un premier terminal (A),
- un amplificateur optique (23) conçu pour transmettre et amplifier le signal optique d'entrée, l'amplificateur optique (23) transmettant et amplifiant le signal optique d'entrée entre la première sortie de coupleur du coupleur amont et une sortie du répéteur, la sortie du répéteur étant destinée à être connectée à une deuxième ligne de fibre optique pour transmettre un signal optique amplifié à un deuxième terminal (B),
- un détecteur optique amont (25) configuré pour détecter la puissance optique du signal optique d'entrée, le détecteur optique amont (25) étant connecté à la deuxième sortie de coupleur du coupleur amont,
- un module de pompage (27) connecté à l'amplificateur optique pour fournir une puissance de pompage à l'amplificateur optique,
- une unité de modulation (28) adaptée pour moduler la puissance de pompage (49) fournie par le module de pompage en réponse à la détection du fait que la puissance optique est en dessous d'un seuil prédéfini (45) pour générer ainsi un message de signalisation modulé en amplitude (15) transporté par le signal optique amplifié par l'amplificateur optique,
- une unité de surveillance (29) connectée au détecteur optique amont et configurée pour activer l'unité de modulation (28) en réponse à la détection du fait que la puissance optique est en dessous du seuil prédéfini (45),
**caractérisé en ce que** le répéteur optique comprend en outre :
- un deuxième coupleur amont (33) disposant d'une entrée de coupleur, d'une première sortie de coupleur et d'une deuxième sortie de coupleur, l'entrée de coupleur du deuxième coupleur amont étant destinée à être connectée à une troisième ligne de fibre optique pour recevoir un deuxième signal optique d'entrée provenant du deuxième terminal (B),
- une deuxième sortie de répéteur étant destinée à être connectée à une quatrième ligne de fibre optique pour transmettre un deuxième signal optique amplifié au premier terminal (A),
- un deuxième amplificateur optique (24) conçu pour transmettre et amplifier le deuxième signal optique d'entrée entre la première sortie de coupleur du deuxième coupleur amont et la deuxième sortie du répéteur, le module de pompage optique (27) étant en outre connecté au deuxième amplificateur optique pour fournir une puissance de pompage au deuxième amplificateur optique (24),
- un deuxième détecteur optique amont (32) connecté à la deuxième sortie de coupleur du deuxième coupleur amont, le deuxième détecteur optique amont étant configuré pour détecter une deuxième puissance optique du deuxième signal optique d'entrée, dans lequel l'unité de surveillance (29) est en outre connectée au deuxième détecteur optique amont et en outre configurée pour activer l'unité de modulation (28) en réponse à la détection du fait que la deuxième puissance optique est en dessous du seuil prédéfini,
dans lequel l'unité de modulation (28) est adaptée pour moduler la puissance de pompage du module de pompage (29) pour générer un message de signalisation modulé en amplitude transporté à la fois par le signal optique amplifié par le premier amplificateur optique et le deuxième signal optique amplifié par le deuxième amplificateur optique, le message de signalisation comprenant un identifiant du répéteur optique.

2. Répéteur optique selon la revendication 1, le répéteur optique comprenant en outre :
- un coupleur aval (31) disposant d'une entrée de coupleur, d'une première sortie de coupleur et d'une deuxième sortie de coupleur, l'entrée de coupleur du coupleur aval étant connectée à l'amplificateur optique (23),
- un détecteur optique aval (30), le détecteur optique aval étant connecté à la deuxième sortie de coupleur du coupleur aval, le détecteur optique aval étant configuré pour détecter une puissance optique amplifiée du signal optique amplifié par l'amplificateur optique (23),
dans lequel la première sortie de coupleur du coupleur aval est connectée à la sortie du répéteur,
dans lequel le détecteur optique aval (30) est en outre connecté à l'unité de surveillance (29),
dans lequel l'unité de surveillance est en outre connectée au module de pompage (28),
l'unité de surveillance étant en outre configurée pour commander le module de pompage (27) pour adapter la puissance de pompage en fonction de la puissance optique amplifiée détectée.

3. Répéteur optique selon l'une quelconque des revendications 1 à 2, dans lequel l'unité de modulation est configurée pour moduler un courant de commande du module de pompage.

4. Répéteur optique selon l'une quelconque des revendications 1 à 3, dans lequel l'unité de modulation est un atténuateur de puissance variable conçu pour atténuer la puissance de pompage du module de pompage.

5. Répéteur optique selon l'une quelconque des revendications 1 à 4, dans lequel l'amplificateur optique comprend un amplificateur à fibre dopée à l'erbium (EFDA).

6. Répéteur optique selon l'une quelconque des revendications 1 à 5, dans lequel l'amplificateur optique comprend un amplificateur Raman.

7. Répéteur optique selon l'une quelconque des revendications 1 à 6, dans lequel l'unité de modulation applique une modulation par déplacement d'amplitude (ASK).

8. Répéteur optique selon l'une quelconque des revendications 1 à 7, dans lequel l'unité de modulation applique une modulation par déplacement d'amplitude binaire (BASK).

9. Répéteur optique selon l'une quelconque des revendications 1 à 8, dans lequel le détecteur optique amont comprend une photodiode.

10. Réseau optique sous-marin (1) comprenant un répéteur optique (N+1) selon l'une quelconque des revendications 1 à 9, le réseau sous-marin comprenant en outre :
- une première ligne de fibre optique (4, 41 et 42) connectée à l'entrée de coupleur du coupleur amont (26) du répéteur optique (N+1),
- un premier terminal (A), le premier terminal étant connecté à la première ligne de fibre optique (4),
- une deuxième ligne de fibre optique connectée à la sortie du répéteur, la deuxième ligne de fibre optique comprenant un amplificateur optique et une unité de branchement de multiplexeur à insertion-extraction optique (7),
- un deuxième terminal (B), le deuxième terminal étant connecté à la deuxième ligne de fibre optique (11),
- un terminal intermédiaire (C), le terminal intermédiaire étant connecté à l'unité de branchement de multiplexeur à insertion-extraction optique (7) pour extraire des signaux optiques de et insérer des signaux optiques dans la deuxième ligne de fibre optique,
- un système de gestion (22) connecté au premier terminal et/ou au deuxième terminal et configuré pour :
- transmettre un message de commande (21) au terminal intermédiaire (C) en réponse à la réception du message de signalisation (15) provenant du premier ou du deuxième terminal (A ou B).

11. Réseau optique sous-marin selon la revendication 10, dans lequel la deuxième ligne de fibre optique comprend une pluralité d'unités de branchement de multiplexeur à insertion-extraction optique, le réseau sous-marin comprenant en outre :
- une pluralité de terminaux intermédiaires, chacun connecté à la deuxième ligne de fibre optique par le biais d'une des unités de branchement de multiplexeur à insertion-extraction optique, dans lequel le système de gestion comprend une base de données dans laquelle est stockée une carte topologique du réseau sous-marin, la carte topologique comprenant des identifiants et des informations de localisation pour le répéteur optique et les terminaux intermédiaires du réseau sous-marin, le système de gestion étant configuré pour :
- en réponse à la réception du message de signalisation provenant du premier ou du deuxième terminal,
- sélectionner l'un des terminaux intermédiaires (C) du réseau sous-marin (1) en fonction de l'identifiant du répéteur et de la localisation du terminal intermédiaire (C) sur la carte topologique,
- transmettre le message de commande (21) au terminal intermédiaire sélectionné (C).

12. Réseau optique sous-marin (1) selon la revendication 10 ou 11, dans lequel le terminal intermédiaire est configuré pour :
en réponse à la réception du message de commande, transmettre à l'amplificateur optique de la deuxième ligne de fibre optique (11) un signal de charge transporté sur des canaux de charge prédéfinis (14) d'un réseau à multiplexage par répartition en longueur d'onde (WDM) (5).

13. Réseau optique sous-marin selon la revendication 12, dans lequel :
le premier terminal transmet le signal optique d'entrée sur des premiers canaux de longueur d'onde (6) du réseau WDM,
les canaux de charge prédéfinis (14) sont définis sur une plage de longueur d'onde qui chevauche les premiers canaux de longueur d'onde (6).
